Europäisches Patentamt

European Patent Office

Office européen des brevets

(11) Numéro de publication : **0 329 224 B1**

# (12) FASCICULE DE BREVET EUROPEEN

(45) Date de publication du fascicule du brevet :
**15.01.92 Bulletin 92/03**

(51) Int. Cl.⁵ : **G01B 11/02**

(21) Numéro de dépôt : **89200288.2**

(22) Date de dépôt : **08.02.89**

(54) **Procédé de mesure de longueurs par caméra à réseau photosensible.**

(30) Priorité : **12.02.88 BE 8800167**

(43) Date de publication de la demande :
**23.08.89 Bulletin 89/34**

(45) Mention de la délivrance du brevet :
**15.01.92 Bulletin 92/03**

(84) Etats contractants désignés :
**AT CH DE ES FR GB GR IT LI LU NL SE**

(56) Documents cités :
**EP-A- 0 094 522**
**EP-A- 0 289 084**
**US-A- 4 650 335**
**PATENT ABSTRACTS OF JAPAN, vol. 10, no. 327 (P-513)[2383], 7 novembre 1986; & JP-A-61 133 806 (TSUBAKIMOTO CHAIN CO.) 21-06-1986**

(73) Titulaire : **FABRIQUE NATIONALE HERSTAL en abrégé FN Société Anonyme B-4400 Herstal (BE)**

(72) Inventeur : **Joannes, René Rue Holliguette 466 B-4654 Herve (BE)**
Inventeur : **Malbrouck, Robert Rue Kerstenne 21 B-4430 Alleur (BE)**

(74) Mandataire : **Donné, Eddy Bureau M.F.J. Bockstael nv Arenbergstraat 13 B-2000 Antwerpen (BE)**

## Description

L'invention concerne un procédé de mesure de longueurs d'un objet, procédé selon lequel on éclaire l'objet de façon à former l'image de l'ombre de cet objet sur un déterteur ou caméra à réseau photosensible, on balaye cette image négative afin d'obtenir des signaux vidéo pour une ligne de balayage, et on traite ces signaux afin de localiser les bords de l'image susdite et on en déduit la distance entre ces bords.

Un procédé de ce genre est connu de EP-A-0094522. Dans ce procédé, destiné à la détection des bords d'une bande, une image qui peut être une image négative, est balayée par un ou même deux détecteurs ou caméras à plusieurs éléments photosensibles et les signaux vidéo individuels des éléments d'une ligne de balayage sont traités. D'abord le signal individuel, où le taux de variation des signaux est maximum, est déterminé. Ensuite deux autres signaux individuels, un de chaque côté du signal susdit, où le taux de variation des signaux est une fraction déterminée du maximum, sont déterminés et la moyenne de ces derniers signaux est formée. A partir de cette moyenne un signal indiquant la position du bord de la bande est généré. Le traitement des signaux d'une ligne de balayage est donc similaire à un calcul de dérivée.

Ce procédé n'est cependant applicable que si l'image du contour de la pièce est suffisament nette, de manière à donner lieu à une transition régulière dans le signal vidéo. Pour cela, il faut que le profil de la pièce observée soit contenu dans le plan de mise au point de la caméra.

Dans le cas où l'on veut localiser, en utilisant ce procédé, les bords de l'image d'un objet constitué de deux parties cylindriques de diamètres différents, séparées par une face perpendiculaire à l'axe de la pièce, les diamètres de la pièce sont mesurables avec précision, car les génératrices qui délimitent le profil des parties cylindriques sont contenues dans le plan de mise au point. Par contre, l'image de la face de la pièce observée de profil par la caméra apparaît floue. La zone de flou s'étale sur plusieurs lignes de balayage de part et d'autre de la position réelle des flancs. De plus, le signal vidéo est perturbé dans cette zone par des réflexions de lumières parasites sur la face, de sorte que la position des faces dans l'image n'est pas déterminable avec précision par le procédé cité ci-dessus. Le traitement des signaux selon EP-A-0094522 n'est pas applicable à un signal irrégulier.

L'invention a pour but de remédier à ces inconvénients et de procurer un procédé de mesure de longueurs par caméra à réseau photosensible permettant la localisation avec précision, dans l'image négative, des faces parallèles à l'axe de visée de la caméra, en permettant ainsi de mesurer par exemple une pièce constituée de deux parties cylindriques de diamètres différents, séparées par une face perpendiculaire à l'axe à la pièce, et observée de profil.

Dans ce but, on balaye l'image selon plusieurs lignes de balayage, au moins au voisinage des bords, on intègre les signaux vidéo sur tout ou partie de chacune de ces lignes de balayage, on suit l'évolution de la valeur de l'intégrale sur plusieurs lignes de balayage successives au voisinage des bords à localiser et on détermine des points dans la courbe représentant cette évolution de l'intégrale correspondant aux bords dans l'image négative.

L'intégration d'un signal vidéo dans un procédé de mesure est connu en soi de US-A-4650335, mais ce procédé n'est pas du type dans lequel l'image est une image négative formée par l'ombre de l'objet. Il est basé sur l'utilisation d'un faisceau laser balayant la surface à inspecter et réfléchi par celle-ci. Ce procédé d'inspection compare l'intensité d'un faisceau laser réfléchi de l'objet à celle d'un faisceau laser réfléchi par un objet de référence. Les signaux correspondant aux intensités détectées par les éléments de détection individuels d'une même ligne de balayage sont intégrés et la localisation des bords de l'image réfléchie est déterminée à partir de cette intégrale.

Ce procédé, qui d'ailleurs est destiné à mesurer des différences d'épaisseur mciroscopiques, permet de localiser, par comparaison, des dénivellations perpendiculaires à la ligne de balayage mais n'est pas applicable à l'observation de faces d'objets présentés de profil par rapport à la camera. Ce procédé ne résoud donc pas le problème enoncé ci-dessus.

Dans le procédé selon l'invention on peut localiser la position des bords dans l'image de l'objet de plusieurs façons.

Dans une forme de réalisation particulière de l'invention, on localise la position des bords dans l'image de l'objet en dérivant deux fois la courbe intégrale et en localisant les endroits correspondant à des maxima de la dérivée seconde dans des zones où la valeur absolue de la dérivée première est supérieure à un seuil fixé expérimentalement.

Dans une autre forme de réalisation particulière de l'invention, on localise la position des bords dans l'image de l'objet en localisant les endroits correspondant à des maxima de la fonction de corrélation de la dérivée seconde de la courbe intégrale avec un filtre déterminé empiriquement et englobant les déformations entraînées par les défauts de mise au point.

Pour plus de clarté, des exemples de réalisation du procédé selon l'invention sont décrits ci-après, à titre illustratif et non restrictif, avec référence aux dessins annexés, dans lesquels :

la figure 1 représente le principe de la mesure selon l'invention ;

la figure 2 représente des signaux vidéo correspondant aux lignes de balayage B à proximité de la face ;

la figure 3 représente une courbe intégrale ;

la figure 4 représente un critère de localisation de la face ;

les figures 5 à 7 représentent encore d'autres critères de localisation de la face ;

la figure 8 représente un problème de mesure particulier dans lequel le signal vidéo est intégré partiellement.

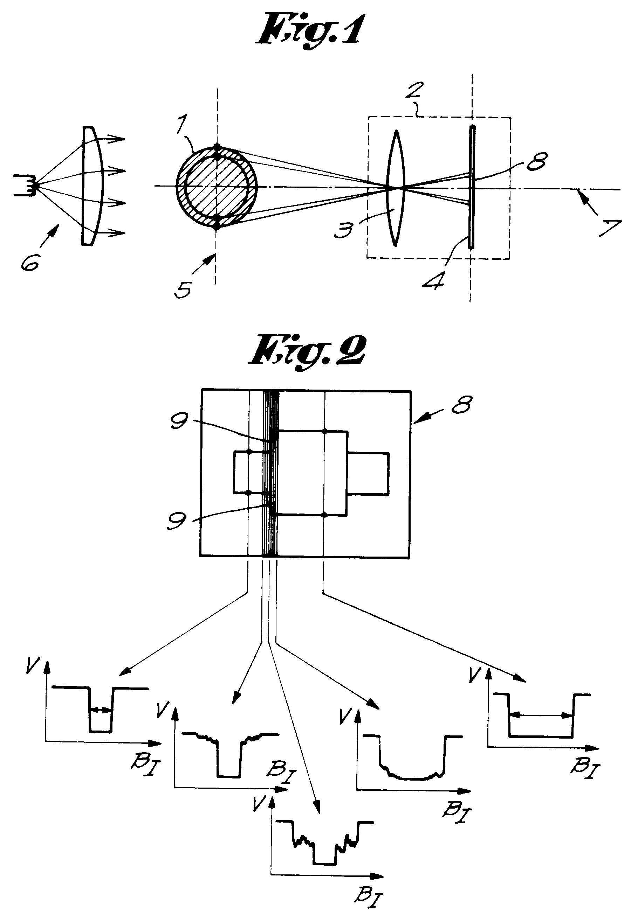

Comme représenté à la figure 1, un objet à mesurer 1, de révolution axiale, est placé devant une caméra 2 constituée d'un objectif 3 et d'un détecteur à réseau photosensible 4. L'axe de l'objet à mesurer 1 est positionné dans le plan de mise au point 5 de la caméra 2 de sorte que l'image de l'objet à mesurer 1 est correctement focalisée sur la surface photosensible du détecteur 4.

La pièce à mesurer 1 est éclairée par une source de lumière collimatée 6, parallèle à l'axe optique 7 de la caméra 2 et située derrière la pièce 1 par rapport à celle-ci, de façon à former, non pas l'image de l'objet 1 sur le détecteur 4, mais bien l'image 8 de son ombre.

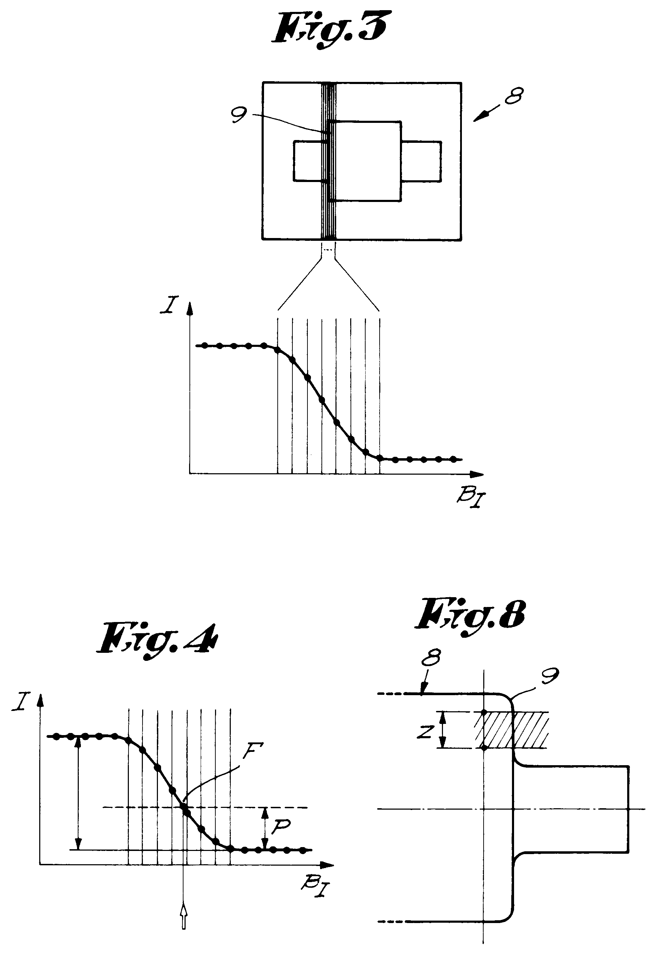

L'image 8 observée par le réseau photosensible 4 est, au moyen de circuits électroniques non-représentés dans la figure 1, balayée ligne par ligne. Les signaux vidéo V ainsi obtenus, plus spécialement les signaux vidéo V correspondant aux lignes de balayage BI à proximité de la face 9 sont, pour les raisons expliquées ci-dessus, perturbés, comme représenté à la figure 2, est ne fournissent aucune information exploitable directement pour délimiter avec précision la position de la face 9.

Le procédé selon l'invention, qui permet de résoudre ce problème consiste substantiellement à intégrer le signal vidéo V de chacune des lignes de balayage BI, à suivre l'évolution de l'intégrale I au cours des balayages BI successifs, au voisinage de la face 9, et de localiser avec précision, dans la courbe intégrale I, des points correspondant aux flancs dans l'image 8 de l'objet à mesurer 1.

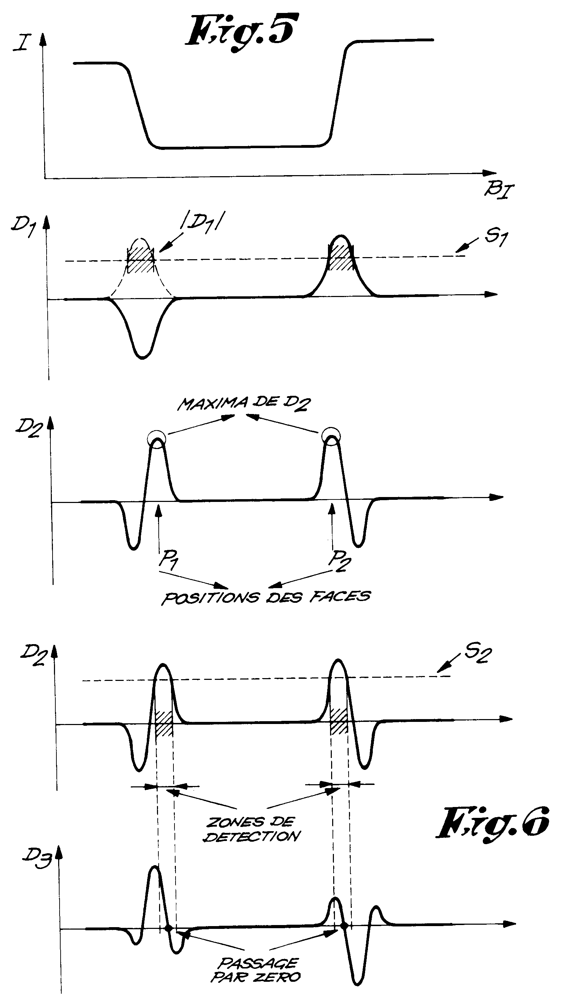

La valeur de l'intégrale I représente la quantité totale de lumière reçue par la caméra 2 le long d'une ligne de balayage BI et varie à l'endroit de la face 9, qui correspond à un changement brusque du profil observé. En réalité, la variation de l'intégrale I à l'endroit de la face 9 n'est pas brutale, mais du fait du flou autour de la face 9, elle suit une courbe régulière comme représentée à la figure 3.

La localisation précise de la face 9 le long de cette courbe peut se faire selon plusieurs critères, dont le choix dépend du type d'éclairage 6 adopté et des caractéristiques de la pièce 1.

L'un d'eux consiste à déterminer le point d'inflexion de la courbe.

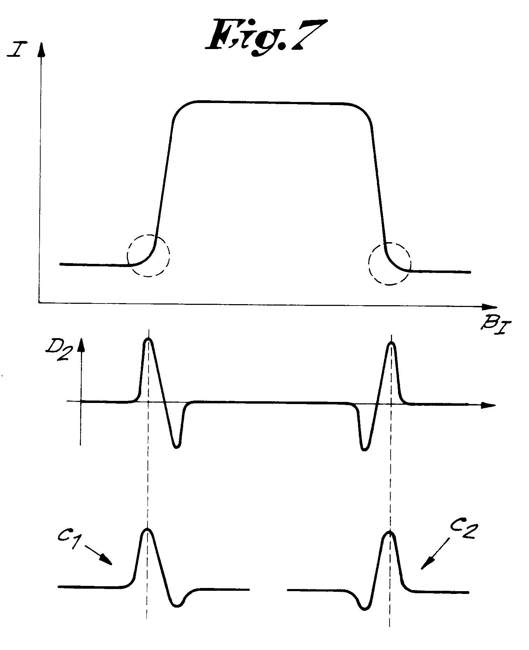

Un autre consiste à détecter le point F où la courbe I atteint un pourcentage P fixé de sa variation totale comme représenté à la figure 4. Ce pourcentage P peut être déterminé expérimentalement lors du calibrage de l'instrument.

Encore un autre critère consiste à dériver deux fois le signal intégral I et à repérer sur la courbe ainsi obtenue des points particuliers caractéristiques des faces 9.

Une première différenciation D1 est réalisée en calculant les différences successives des valeurs de l'intégrale I obtenues à chaque balayage BI de la caméra 2. La dérivée seconde D2 est obtenue par des différences successives des valeurs obtenues par le calcul de la première dérivée D1.

La position des faces 9 est déterminée, comme représenté à la figure 5, en recherchant dans la courbe des dérivées secondes D2 les positions des maxima positifs P1 et P2, c'est-à-dire les points correspondant à une courbure maximale, dans un sens déterminé, dans la courbe intégrale I.

Afin d'éliminer des détections parasites qui pourraient résulter de la présence de bruit dans le signal dérivée seconde D2, les zones dans lesquelles la détection est réalisée sont limitées aux endroits où la valeur absolue de la dérivée première D1 est supérieure à un seuil S1 fixé expérimentalement.

Le procédé de localisation des faces 9 basé sur la détection de la position des maxima P1 et P2 de la courbe dérivée seconde D2 peut encore être affiné en remplaçant la recherche des positions des maxima P1 et P2, par celle des passages à zéro de la courbe D3, dérivée de la courbe dérivée seconde D2, dans les zones où la valeur de la courbe dérivée seconde D2 est plus grande qu'un seuil S2 déterminé expérimentalement, comme représenté à la figure 6.

Des procédures d'interpolation permettant d'augmenter la résolution, initialement quantifiée par la durée de balayage BI de la caméra 2, peuvent être appliquées.

Un autre critère de repérage des faces 9 au moyen de la courbe intégrale I, enregistrée lors de chaque balayage BI de la caméra 2, consiste à rechercher les endroits correspondant à des maxima de la fonction de corrélation de la dérivée seconde D2 de la courbe intégrale I avec un filtre C déterminé empiriquement et englobant les déformations entraînées par les défauts de mise au point.

Le filtre est calculé empiriquement en enregistrant de nombreuses courbes intégrales I pour des pièces 1 de nature diverses ; calculant la dérivée seconde D2 des courbes ainsi obtenues et en extrayant une courbe moyenne représentative de la dérivée seconde D2 ; échantillonnant cette courbe dérivée seconde D2 à une cadence correspondant aux vitesses de translation obtenues dans la pratique et en optimisant le filtre C ainsi constitué de façon à renforcer son effet au voisinage des maxima positifs.

La forme du filtre (C) ainsi constitué varie en fonction du type de flanc dans la courbe intégrale. Afin d'éviter de devoir calculer deux fonctions de corrélation en parallèle, correspondant chacune à un type de flanc particulier de la courbe intégrale I, le procédé adopté consiste à adapter automatiquement le filtre C utilisé au type de flanc recherché dans la zone de calcul de la fonction de corrélation.

Ceci est réalisé en déterminant localement le signe de la dérivée première D1 du signal intégrale I et d'effectuer les produits de convolution nécessaires au calcul de la fonction de corrélation en prenant en compte le filtre C correspondant.

Le critère décrit ci-dessus est représenté à la figure 7, dans laquelle C1 et C2 sont des filtres pour flanc montant, respectivement pour flanc descendant.

L'intégration du signal vidéo V à chaque balayage BI peut être faite sur la totalité du balayage BI, ou sur une ou plusieurs parties du balayage BI et peut être réalisée par les techniques classiques, soit sur le signal vidéo analogique, soit après numérisation du signal.

L'intégration du signal vidéo V après numérisation est spécialement intéressante dans le cas d'une caméra 2 à réseau de cellules photosensibles 4. Chaque pixel ou élément d'image est numérisé à la fréquence d'horloge du réseau 4 et l'intégrale I se ramène à l'addition des valeurs numériques des pixels successifs. L'intégration partielle, sur une plage Z du signal vidéo, comme représenté à la figure 8 pour un problème de mesure particulier, est dans ce cas particulièrement aisée, car le comptage des coups d'horloge commandant le balayage du réseau 4 permet de faire démarrer l'addition à un pixel de position déterminée, et de l'arrêter après le nombre de pixels souhaités.

Dans le cas d'un réseau matriciel, on effectue l'intégration sur tout ou partie du signal fourni lors du balayage de chaque ligne successive du réseau 4.

Dans le cas d'un réseau linéaire, utilisé en association avec un dispositif de translation déplaçant la pièce à mesurer 1 devant le capteur, la valeur d'intégrale obtenue à chaque balayage de la ligne photosensible est associée au relevé de la position correspondante de la pièce afin d'obtenir la courbe intégrale sur laquelle on applique un des critères cités ci-dessus, en sorte de localiser les faces de l'objet.

Il est évident, que de nombreuses modifications peuvent être apportées à l'exemple décrit ci-dessus, sans pour autant sortir du cadre de l'invention.

## Revendications

1. Procédé de mesure de longueurs d'un objet (1), procédé selon lequel on éclaire l'objet (1) de façon à former l'image (8) de l'ombre de cet objet (1) sur un détecteur (2) à réseau photosensible (4), on balaye cette image (8) de l'ombre afin d'obtenir des signaux vidéo (V) pour une ligne de balayage (BI), et on traite ces signaux (V) afin de localiser les bords de l'image (8) susdite et d'en déduire les distances entre ces bords, caractérisé en ce qu'on balaye l'image (8) selon plusieurs lignes de balayage (BI), au moins au voisinage des bords, on intègre les signaux vidéo (V) sur tout ou partie de chacune de ces lignes de balayage (BI), on suit l'évolution de la valeur de l'intégrale sur plusieurs lignes de balayage (BI) successives au voisinage des bords (9) à localiser, et on détermine des points dans la courbe (I) représentant cette évolution de l'intégrale correspondant aux bords dans l'image (8) de l'ombre.

2. Procédé suivant la revendication 1, caractérisé en ce qu'on intègre le signal vidéo (V) de chacune des lignes de balayage (BI) sur le signal vidéo analogique.

3. Procédé suivant la revendication 1, caractérisé en ce qu'on intègre le signal vidéo (V) de chacune des lignes de balayage (BI) après numérisation du signal vidéo (V).

4. Procédé suivant la revendication 3, caractérisé en ce que l'intégration se ramène à l'addition des valeurs numériques des pixels ou des éléments d'images successifs.

5. Procédé suivant l'une ou l'autre des revendications 1 à 4, caractérisé en ce qu'on localise la position des bords dans l'image (8) de l'ombre de l'objet (1) en déterminant le point d'inflexion de la courbe de l'intégrale (I) constituée par la succession des valeurs de l'intégrale (I) obtenues lors de chaque balayage (BI).

6. Procédé suivant l'une ou l'autre des revendications 1 à 4, caractérisé en ce qu'on localise la position des bords dans l'image (8) de l'ombre de l'objet (1) en détectant le point (F) où la courbe intégrale (I) constituée par la succession des valeurs de l'intégrale (I) obtenues lors de chaque balayage (BI) atteint un pourcentage (P) fixe de sa variation totale (A).

7. Procédé suivant la revendication 6, caractérisé en ce qu'on détermine ledit pourcentage (P) expérimentalement lors du calibrage de l'instrument.

8. Procédé suivant l'une ou l'autre des revendications 1 à 4, caractérisé en ce qu'on localise la position des bords dans l'image (8) de l'ombre de l'objet (1) en dérivant deux fois la courbe intégrale (I) et en localisant les endroits correspondant à des maxima de la dérivée seconde (D2) dans des zones où la valeur absolue de la dérivée première (D1) est supérieure à un seuil (S1) fixé expérimentalement.

9. Procédé suivant l'une ou l'autre des revendications 1 à 4, caractérisé en ce qu'on localise la position des bords dans l'image (8) de l'ombre de l'objet (1) en localisant les endroits correspondant à des maxima de la fonction de corrélation de la dérivée seconde (D2) de la courbe intégrale (I) avec un filtre (C) déterminé empiriquement et englobant les déformations entraînées par les défauts de mise au point.

10. Procédé suivant la revendication 9, caractérisé en ce qu'on utilise un filtre (C) qui est déterminé empiriquement en analysant de nombreuses courbes intégrales (I) typiques tenant compte de l'influence du flou.

11. Procédé suivant la revendication 9 ou 10, caractérisé en ce qu'on utilise un filtre (C) qui est optimisé de façon à amplifier la sensibilité du test de corrélation au voisinage des maxima de la dérivée seconde (D2).

12. Procédé suivant l'une ou l'autre des revendications 9 à 11, caractérisé en ce qu'en utilise un filtre qui s'adapte automatiquement au type de flanc présent dans la courbe intégrale (I).

13. Procédé suivant l'une ou l'autre des revendications 1 à 12, caractérisé en ce que dans le cas où l'image (8) analysée est reproduite sur un réseau matriciel (4), on effectue l'intégration sur tout ou partie du signal fourni lors du balayage de chaque ligne successive du réseau.

14. Procédé suivant l'une ou l'autre des revendications 1 à 12, caractérisé en ce que, dans le cas où l'image (8) analysée est reproduite sur un réseau linéaire (4) utilisé en association avec un dispositif de translation déplaçant l'objet à mesurer (1) devant le détecteur (2), on associe la valeur d'intégrale (I) obtenue à chaque balayage (BI) de la ligne photosensible au relevé de la position correspondante de l'objet afin d'obtenir la courbe (I).

**Patentansprüche**

1. Verfahren zur Messung der Länge eines Objektes (1), Verfahren laut dessen man das Objekt (1) in solcher Weise beleuchtet daß ein Schattenbild (8) des Objektes geworfen wird auf einen Detektor (2) mit lichtempfindlicher Platte (4), man tastet dieses Schattenbild (8) ab um Videosignale (V) zu erhalten für eine Abtastzeile (BI) und man behandelt diese Signale (V) um die Ränder des obengenannten Bildes (8) zu ermitteln und daran die Entfernungen zwischen den Rändern zu entnehmen, dadurch gekennzeichnet daß man das Bild (8) über mehrere Abtastzeilen (BI) abtastet, zumindest in der Nähe der Ränder, man integriert die Videosignale (V) ganz oder teilweise über jede der Abtastzeilen (BI), man folgt der Entwicklung des Integralwerts über mehrere sukzessiven Abtastzeilen (BI) in der Nähe des zu ermitteln Randes (9) und man bestimmt Punkte auf der Kurve (I) die diese Entwicklung der mit den Rändern des Schattenbildes (8) übereinstimmenden Integrale darstellen.

2. Verfahren laut Anspruch 1, dadurch gekennzeichnet daß man das Videosignal (V) einer jeden Abtastzeile (BI) mit dem analogen Videosignal integriert.

3. Verfahren laut Anspruch 1, dadurch gekennzeichnet daß man das Videosignal (V) einer jeden Abtastzeile (BI) nach digitalisierung mit item Videosignal (V) integriert.

4. Verfahren laut Anspruch 3, dadurch gekennzeichnet daß die Integration zurückgeführt wird auf die Zusammenzählung der numerischen Werte der Bildpunkte oder der sukzessiven Bildelemente.

5. Verfahren laut eines beliebigen der Ansprüche 1 bis 4, dadurch gekennzeichnet daß man die Position der Ränder in dem Schattenbild (8) des Objektes (1) findet durch Ermittlung des Knickpunkts der Integralkurve (I) zusammengesetzt aus den sukzessiven Integralwerte (I) erhalten nach jeder Abtastung (BI).

6. Verfahren laut eines beliebigen der Ansprüche 1 bis 4, dadurch gekennzeichnet daß man die Position der Ränder in dem Schattenbild (8) des Objektes (1) findet durch Ermittlung des Punktes (F) an dem die Integralkurve (I) zusammengesetzt aus den sukzessiven Integralwerte (I) erhalten nach jeder Abtastung (BI) einen Prozentsatz (P) seiner Totalvariation (A) erreicht.

7. Verfahren laut Anspruch 6, dadurch gekennzeichnet daß man den genannten Prozentsatz (P) experimentell während der Eichung des Instruments bestimmt.

8. Verfahren laut eines beliebigen der Ansprüche 1 bis 4, dadurch gekennzeichnet daß man die Position der Ränder in dem Schattenbild (8) des Objektes (1) findet durch zweifache Ermittlung der Integralkurve (I) und durch ermitteln der mit den Höchstwerten der zweiten Ableitung (D2) übereinstimmenden Gebieten in den Feldern wo der absolute Wert der ersten Ableitung (D1) größer ist als ein experimentell bestimmter Grenzwert (S1).

9. Verfahren laut eines beliebigen der Ansprüche 1 bis 4, dadurch gekennzeichnet daß man die Position der Ränder in dem Schattenbild (8) des Objektes (1) findet durch Ermittlung der mit den Höchstwerten der Korrelationskurve (D2) der zweiten Ableitung (D2) übereinstimmenden Integralkurve (I) mit einem experimentell bestimmten Filter (C) und einschließlich der Verzerrung verursacht von Einstellungsfehlern.

10. Verfahren laut Anspruch 9, dadurch gekennzeichnet daß man ein Filter (C) verwendet das empirisch bestimmt wird bei der Analyse der typischen Integralkurven (I) unter Berücksichtigung des Auflösungsvermögens.

11. Verfahren laut Anspruch 9 oder 10, dadurch gekennzeichnet daß man ein Filter (C) verwendet das optimiert worden ist um die Empfindlichkeit des Korrelationstests in der Nähe der Höchstwerte der zweiten Ableitung zu steigern.

12. Verfahren laut eines jeden beliebigen der Ansprüche 9 bis 11, dadurch gekennzeichnet daß man ein Filter verwendet das sich automatisch dem gegenwärtigen Flankentyp anpaßt das in der Kurve dargeboten wird.

13. Verfahren laut eines jeden beliebigen der Ansprüche 1 bis 12, dadurch gekennzeichnet daß falls das analysierte Bild (8) auf ein Matrixschirm projiziert wird, man die Integration ganz oder teilweise am gelieferten Signal verwirklicht während des Abtastens einer jeden sukzessiven Schirmzeile.

14. Verfahren laut eines jeden beliebigen der Ansprüche 1 bis 12, dadurch gekennzeichnet daß falls das analysierte Bild (8) auf ein lineares Schirm projiziert wird, verwendet in Zusammenwirkung mit einem Umwandlungsgerät das den zu messenden Gegenstand (1) vor den Detektor (2) stellt, der Integralwert (I) erhalten wird bei jedem Abtasten (BI) der lichtempfindlichen Zeile, verbunden mit dem Ablesen der übereinstimmenden Position des Gegenstands um die Kurve zu erhalten.

## Claims

1. Method to measure the length of an object (1), method according to which the object (1) is lit in order to form the image (8) of the shadow of said object (1) on a detector (2) with photosensitive screen plate (4), said image of the shadow (8) is scanned in order to obtain video signals (V) for one scanning line (BI) and said signals (V) are processed in order to localize the edges of said image (8) and to deduce thereof the distance between said edges, characterized in that the image (8) is scanned according to several scanning lines (BI), at least in the neighbourhood of the edges, the video signals (V) being integrated on the whole or a part of each of those scanning lines (BI), the evolution of the value of the integral being followed over several successive scanning lines (BI) in the neighbourhood of the edges (9) to be localized, and points are defined in the curve (I) representing this evolution of the integral corresponding with the edges in the image (8) of the shadow.

2. Method according to claim 1, characterized in that the video signal (V) of each of the scanning lines (BI) is integrated with the analog video signal.

3. Method according to claim 1, characterized in that the video signal (V) of each of the scanning lines (BI) is integrated after digitization of the video signal (V).

4. Method according to claim 3, characterized in that the integration is reduced to the addition of the numeric values of the pixels or of the successive image elements.

5. Method according to one or any of the claims 1 through 4, characterized in that the position of the edges in the image (8) of the shadow of the object (1) is localized by defining the inflection point of the curve of the integral (I) constituted by the succession of values of the integral (I) obtained after each scan (BI).

6. Method according to one or any of the claims 1 through 4, characterized in that the position of the edges in the image (8) of the shadow of the object (1) is localized by detecting the point (F) where the curve of the integral (I) constituted by the succession of values of the integral (I) obtained after each scan (BI) reaches a fixed percentage (P) of its total variation (A).

7. Method according to claim 6, characterized in that said percentage (P) is defined experimentally during the calibration of the instrument.

8. Method according to one or any of the claims 1 through 4, characterized in that the position of the edges in the image (8) of the shadow of the object (1) is localized by differentiating twice the curve of the integral (I) and by localizing the locations corresponding with the maximums of the second derivative (D2) in the fields where the absolute value of the first derivative (D1) is higher than a threshold (S1) which has been experimentally defined.

9. Method according to one or any of the claims 1 through 4, characterized in that the position of the edges in the image (8) of the shadow of the object (1) is localized by the localization of the locations corresponding with the maximums of the correlation function of the second derivative (D2) of the curve of the integral (I) by means of a filter (C) empirically defined and covering the distortions caused by to the defects in focussing.

10. Method according to claim 9, characterized in that a filter (C) is used which is defined empirically by the analysis of several typical curves of integrals (I) taking the influence of the lack of definition into account.

11. Method according to claim 9 or 10, characterized in that a filter (C) is used which is optimized in order to amplify the sensitivity of the correlation test in the neighbourhood of the maximums of the second derivative (D2).

12. Method according to one or any of the claims 9 through 11, characterized in that a filter is used which automatically adapts itself to the kind of flank found in the curve of the integral (I).

13. Method according to one or any of the claims 1 through 12, characterized in that in the event the analyzed image (8) is reproduced on a matrix screen plate (4), the integration is performed on the whole or a part of the given signal during the scanning of each successive line of the screen plate.

14. Method according to one or any of the claims 1 through 12, characterized in that, in the event the analyzed image (8) is reproduced on a linear screen plate (4) used in connection with a translation device moving the object to be measured (1) in front of the detector (2), the value of the integral (I) obtained after each scan (BI) of the photosensitive line is associated with the reading of the corresponding position of the object in order to obtain the curve (I).

# Fig.1

# Fig.2

# Fig.3

# Fig.4

# Fig.8

# *Fig.5*

MAXIMA DE $D_2$

$P_1$      $P_2$

POSITIONS DES FACES

ZONES DE
DETECTION

*Fig.6*

PASSAGE
PAR ZERO

*Fig.7*